# EUROPÄISCHE PATENTANMELDUNG

(11) **EP 1 541 820 A2**
(43) Veröffentlichungstag der Anmeldung: **15.06.2005**
(21) Anmeldenummer: 04028235.2
(22) Anmeldetag: 29.11.2004
(51) Int. Cl.: F01N 3/08, F01N 3/28, F01N 3/10, F01N 7/14, F01N 3/20

(54) **Brennkraftmaschine mit einer Abgasreinigungsvorrichtung und Verfahren zum Betrieb einer Brennkraftmaschine**

(30) Priorität: 11.12.2003 DE 10357887
(71) Anmelder: Volkswagen Aktiengesellschaft, 38436 Wolfsburg (DE)
(72) Erfinder: Degen, Alf, Dipl.-Ing., 38536 Meinersen (DE); Rothkegel, Ralf, 38442 Wolfsburg (DE)
(74) Vertreter: Pohlmann, Bernd Michael, Dr.

(57) **Zusammenfassung**

Die Erfindung betrifft eine Brennkraftmaschine (10) mit einer Abgasreinigungsvorrichtung mit einem Vorkatalysator (14), und einem stromab des Vorkatalysators (14) angeordneten Hauptkatalysator (18) sowie einer zwischen Vorkatalysator (14) und Hauptkatalysator (18) angeordneten Abgasleitung (16), wobei der Vorkatalysator (14) edelmetallfrei ausgebildet ist. Ferner umfasst die Erfindung ein Verfahren zum Betrieb einer gattungsgemäßen Brennkraftmaschine bei dem der Vorkatalysator (14) edelmetallfrei ausgebildet ist und eine reduzierte Anfettung eines Motor-Lambda-Wertes zum Bauteilschutz erfolgt.

## Beschreibung

Die Erfindung betrifft eine Brennkraftmaschine sowie ein Verfahren für den Betrieb einer Brennkraftmaschine jeweils nach den Oberbegriffen der unhabhängigen Patentansprüche.

Die für die Abgasnachbehandlung bei Verbrennungsmotoren üblicherweise eingesetzten Katalysatoren weisen einen Träger auf, der mit einen oberflächenvergrößernden Washcoat beschichtet ist. Zur Erhöhung der Konvertierungsleistung und zur Reduzierung der Temperatur, bei der der Katalysator anspringt, wird zusätzlich im Katalysator Edelmetall, wie Platin, Palladium oder Rhodium eingesetzt. Der Washcoat dient neben der Oberflächenvergrößerung auch als Haftgrund für die Edelmetallbeladung des Katalysators.

Je nach Motorkonzept und einzuhaltender Abgasnorm werden ein oder mehrere Katalysatoren eingesetzt. Mehrfachkatalysatorsysteme weisen überwiegend zumindest zwei Träger auf. Üblich ist ein Verbau eines Systems mit zwei Trägern im Unterbodenbereich. Ferner erfolgt häufig eine motornahe Anbringung eines Vorkatalysators bei einem im Unterbodenbereich angeordneten Hauptkatalysator.

Die motornahe Anordnung des Vorkatalysators, beispielsweise direkt hinter einem Abgaskrümmer, wird eingesetzt, wenn eine besonders schnelle Erwärmung bzw. Durchwärmung des gesamten Katalysatorsystems erreicht werden soll. Der Vorkatalysator verbessert dabei den light-off (Anspringen) des Gesamtsystems, indem er zum einen die aus dem Brennraum des Verbrennungsmotors emitierten Abgase bzw. Schadstoffe teilweise konvertiert, zum anderen bei dieser exothermen Reaktion zusätzlich Wärme erzeugt. Eine derartige Funktion des Vorkatalysators ist insbesondere bei großer Lauflänge des Abgases in der Abgasleitung zwischen Motor und Unterbodenkatalysator erforderlich, da die Wärmeverluste an den Rohren der Abgasleitung zu groß sind, um eine ausreichend schnelle Aufheizung des Unterbodenkatalysators auf seine Arbeitstemperatur zu gewährleisten.

Ein Nachteil einer motornahen Anordnung des Vorkatalysators ist eine starke thermische Belastung des Vorkatalysators in Betriebspunkten des Verbrennungsmotors mit Vollast oder oberer Teillast. Thermische Belastungen können zu einer Agglomeration der Edelmetalle und damit zu einer geringeren aktiven Oberfläche, und diese wiederum zu einer geringeren Konvertierungsleistung sowie zur einer erhöhten Anspringtemperatur des Vorkatalysators führen.

Zum Schutz des Vorkatalysators gegen eine zu hohe thermische Belastung wird im Stand der Technik ein Betrieb des Motors mit einem angefetteten Motor-Lambda-Wert eingesetzt. Dabei wird ein Luft/Kraftstoffgemisch verwendet, das einen höheren Anteil an Kraftstoff aufweist als zur Realisierung der geforderten Leistung benötigt wird. Der überschüssige Kraftstoff wird unverbrannt durch den Brennraum des Motors befördert und kühlt als unverbrannter Teil des Abgases den Vorkatalysator. Diese Methode zum temperaturmäßigen Schutz des Vorkatalysators wird auch als Bauteilschutz (BTS) bezeichnet. Die Anfettung des Luft/Kraftstoffgemischs für den BTS führt zu einem deutlich höheren Kraftstoffverbrauch, als es für den Betrieb bei der angeforderten Leistung notwendig wäre. Ferner kann das für die katalytische Abgasreinigung optimale Luft/Kraftstoffverhältnis Lambda = 1,0 häufiger nicht eingehalten werden, so dass die Konvertierungsleistung des Abgasreinigungssystems sinkt.

Zur Verbesserung der Temperaturbeständigkeit von Abgaskatalysatoren ist bereits aus der DE 44 31 134 A1 bekannt, einen Katalysator in Strömungsrichtung in reaktionsfähige und reaktionsträge Abschnitte aufzuteilen. Hierdurch erfolgt in den reaktionsträgen Bereichen eine Abkühlung des im vorangegangenen reaktionsfähigen Bereich erwärmten Abgases, so dass eine lokale Überhitzung des Katalysators durch die im Bereich des Katalysatoreintritts in Strömungsrichtung zunehmende Abgastemperatur der Grenzschicht vermieden wird. Aus der DE OS 36 43 785 ist ein Verfahren zum Entgiften von Verbrennungsmotorabgasen bekannt, bei den die Abgase durch einen Abgaskatalysator hindurchgeleitet werden, der gleichmäßig mit bestimmten Edelmetallen beschichtete Pellets oder Monolithe enthält. Vor dem in Kontakttreten mit den Edelmetallen werden die Abgase zunächst durch eine Katalysatorgift/Abscheidezone geleitet, die frei von Edelmetallen ist.

Aus der DE 101 04 751 A1 ist eine Vorrichtung zum Reinigen von Abgasen eines Verbrennungsmotors, bestehend aus einem warmen Körper mit einem motornahen und einem motorfernen Ende und einer auf diesen warmen Körper aufgebrachten aktiven Beschichtung bekannt.

Im Bereich des motornahen Endes des warmen Körpers befindet sich wenigstens eine beschichtungsfreie Zone. Die bekannte Vorrichtung soll einen Katalysator dahingehend weiterbilden, dass sich auch dann, wenn sich in einem Abgas Schusskanäle ausbilden ein lokales Versagen des Katalysators zuverlässig vermeiden lässt.

Zur weiteren Absenkung von Kohlenwasserstoff (HC)-Emissionen beim Kaltstart ist aus dem Stand der Technik bereits der Einsatz von HC-Adsorbern bekannt. Hierbei handelt es sich bevorzugt um Zeolithe, die der Beschichtung beigemischt werden. Derartige Zeolithe können bei niedrigen Temperaturen und hohen Konzentrationen Kohlenwasserstoffe adsorptiv einspeichern. Beim Kaltstart eines Verbrennungsmotors ist diese Situation gegeben, da dann der Katalysator kalt ist und hohe Konzentrationen in der Kaltstartanfettung am Kohlenwasserstoffen vorhanden sind. Die Startanfettung wird anschließend im Nachstart und Warmlauf des Motors zurückgenommen, während sich gleichzeitig der Katalysator erwärmt. Dies führt zu einer Desorption von HC. Es sind verschiedene Beschichtungstechniken bekannt. So wird in einem 1. Schritt Washcoat mit Edelmetall zusammen auf einen Träger aufgebracht. in einem 2. Schritt erfolgt ein Auftragen eines Zeolithen. Damit wird erreicht, dass das Adsorptionsverhalten auch nach Alterung noch sehr gut ist, da der Zeolith auch noch bis zur höheren Temperaturen als das im Washcoat enthaltene Edelmetall stabil bleibt. Allerdings müssen Schadstoffkomponenten aus dem Abgas zuerst die Zeolith-Schicht durchdringen um konvertiert werden zu können. Bei steigender Temperatur erwärmt sich das Edelmetall in der unter der Zeolith liegenden Washcoat-Schicht langsamer, so dass die Desorption auf der äußeren Zeolith-Schicht früher einsetzt und relativ viele Kohlenwasserstoffe unkonvertiert ausgestoßen werden. Erfolgt der Beschichtungsvorgang in umgekehrter Reihenfolge, hat dies den Nachteil, dass die edelmallhaltige Schicht stärker thermisch altert und damit eine höhere Anspringtemperatur und geringere Konvertierungsraten aufweist. Ferner wird das Adsorptionsverhalten des Zeolithen beeinträchtigt, da die Schadstoffkomponenten erst durch den darüber liegenden edelmetallhaltigen Washcoat diffundieren müssen. Ferner ist bekannt, Edelmetall, Washcoat und Zeolith vor dem eigentlichen Beschichtungsvorgang zu mischen und zusammen auf den Träger aufzubringen. Dabei entsteht im Hinblick auf Alterung und Adsorption ein gemischtes Verhalten.

Aus der EP 0 697 505 A1 ist ein System bekannt, bei dem ein mit einem Loch versehener Adsorber vor einem Dreiwegekatalysator angeordnet ist. Bei niedrigem Durchsetzen an Abgas soll die Strömung weitergehend im Außenbereich anliegen. Der durch das Loch geführte Teilstrom des Abgases heizt den nachgeschalteten Dreiwegekatalysator auf. Aus der DE 39 287 60 C2 ist eine Abgasreinigungsvorrichtung bekannt, bei der ein Adsorptionsfänger für die Adsorption eines Schadstoffbestandsteils aus den Abgas einen Zeolith enthält. Ein Nachteil der erwähnten Systeme ist, dass die Desorptionstemperatur der Zeolithe unter der Anspringtemperatur des nachgeschalteten Katalysators liegt, so dass Kohlenwasserstoffe desorbiert werden, die der nachgeschaltete Katalysator noch nicht vollständig konvertieren kann. Je weiter Kohlenwasserstoff-Adsorber und Katalysator voneinander getrennt sind, desto mehr Kohlenwasserstoffe passieren den Katalysator und werden in die Umwelt freigesetzt. Aus der DE 42 40 012 A1 ist zur Lösung dieses Problems eine Abgasreinigungsvorrichtung mit einem katalytischen Konverter und einem stromab desselben angeordneten Zeolithe enthaltenen Adsorber bekannt. Vom Adsorber ausreichend weit beanstandet ist eine Heizvorrichtung für den katalytischen Konverter vorgesehen, damit dieser bereits wirksam ist, wenn der Adsorber Kohlenwasserstoffe freisetzt.

Aufgabe der vorliegenden Erfindung ist die Schaffung einer Brennkraftmaschine mit einer Abgasreinigungsvorrichtung, die kostengünstig und konstruktiv einfach, eine Reduzierung der Kaltstartemissionen ermöglicht und eine erhöhte thermische Beständigkeit aufweist.

Ferner umfasst die Aufgabe die Schaffung eines Verfahrens zum Betrieb einer Brennkraftmaschine mit einer Abgasreinigungsvorrichtung, welches einen verbrauchsgünstigen und konstruktiv einfachen Temperaturschutz des Vorkatalysators ermöglicht.

Erfindungsgemäß wird die Aufgabe durch die Merkmale der jeweiligen unabhängigen Patentansprüche gelöst.

Erfindungsgemäß ist vorgesehen bei einer Brennkraftmaschine mit einer Abgasreinigungsvorrichtung mit einem Vorkatalysator, und einem stromab des Vorkatalysators angeordneten, durch einer Abgasleitung mit dem Vorkatalysator verbundenen Hauptkatalysator, wobei der Vorkatalysator edelmetallfrei ausgebildet ist.

Die edelmetallfreie Ausbildung des Vorkatalysators führt zur einer deutlichen Erhöhung der Temperaturstabilität im Vergleich zu einem Edelmetall aufweisenden Vorkatalysator. Die edelmetallfreie Ausbildung des Vorkatalysators ermöglicht ferner einen schnelleren light-off des Hauptkatalysators. Es wird die interne Temperaturerhöhung gezielt um einen gewissen Betrag, vorzugsweise 50°C K, gegenüber einem entsprechend mit Edelmetall versehenen Vorkatalysator reduziert. Damit wird eine thermische Schonung des Bauteils erreicht. Die erfindungsgemäße Ausbildung des Vorkatalysators ermöglicht eine Kostenreduzierung gegenüber einer Edelmetallbeladung des Vorkatalysators.

Die Abgasleitung zur Verbindung von Vorkatalysator und Hauptkatalysator weist eine Länge von zumindest 100 cm auf, einen Wärmeverlust von höchstens 1 K/cm Länge der Abgasleitung und/oder ist als Luftspalt-Isoliertes Rohr (LSI-Rohr) ausgebildet. Die Erfindung zielt daher auch auf weiträumig voneinander getrennte Katalysatoren. Der edelmetallfreie Vorkatalysator erreicht zwar nicht die Konvertierungsraten eines mit edelmetallbeladenen Katalysators, wirkt aber als light-off-Beschleuniger aufgrund von exothermischen Reaktionen. Der Hauptkatalysator wird insbesondere schneller auf seine Betriebstemperatur gebracht, wenn nur ein geringer Wärmeverlust in der Abgasleitung auftritt, insbesondere wenn diese als LSI-Rohr ausgeführt ist.

Wenn der Vorkatalysator eine Trägerstruktur mit Zeolith-Beschichtung aufweist, kann zusätzlich Zeit gewonnen werden, um den Hauptkatalysator auf Betriebstemperatur zu bringen. Eine erhöhte Konvertierungsleistung des Vorkatalysators wird erreicht, wenn dieser eine Trägerstruktur mit Washcoat-Beschichtung aufweist. Der Vorkatalysator kann auch eine metallische Trägerstruktur, insbesondere aus gewellten und/oder gewickelten Metallfolien aufweisen, die optional mit einer Zeolith und/oder Washcoat- Beschichtung versehen ist, womit eine weitere Erhöhung der thermischen sowie der mechanischen Stabilität erreicht wird.

Erfindungsgemäß ist eine Anpassung von Vorkatalysator und Hauptkatalysator vorgesehen um eine vorgegebene Gesamtkonvertierung, vorzugsweise von zumindest 98% von zumindest einer der Abgaskomponenten Kohlenwasserstoff, Kohlenmonoxid und Stickoxid zu gewährleisten. Vorzugsweise erfolgt die Anpassung derart, dass für die Konvertierung der Abgaskomponenten Kohlenwasserstoff, Kohlenmonoxid bzw. Stickoxid zumindest eine der folgenden Bedingungen erfüllt ist:
Mehr als 50%, vorzugsweise mehr als 60%, besonders bevorzugt mehr als 70% des Kohlenwasserstoffs
Mehr als 60%, vorzugsweise mehr als 70%, besonders bevorzugt mehr als 80% des Kohlenmonoxids
Mehr als 20%, vorzugsweise mehr als 30%, besonders bevorzugt mehr als 40% der Stickoxide
der Gesamtkonvertierung der jeweiligen Abgaskomponente, bezogen auf die Rohemission wird vom Vorkatalysator übernommen. Eine derartige Anpassung reduziert die Gesamtkosten des aus Vorkatalysator und Hauptkatalysator bestehenden Abgassystems.

Besonders bevorzugt ist eine Anpassung, die eine relative Volumenvergrößerung des Hauptkatalysators umfasst. Das erfindungsgemäße Verfahren zum Betrieb einer Brennkraftmaschine sieht einen edelmetallfreien Vorkatalysator vor, wobei eine Anfettung eines Motor-Lambda-Wertes zum Bauteilschutz erst bei einer höheren Temperatur des Vorkatalysators T_{VK} erfolgt, als bei einem nicht edelmetallfreien Vorkatalysator. Ein derartiger Betrieb der Brennkraftmaschine ermöglicht eine Kraftstoffeinsparung und geringere Abgasemissionen aufgrund der geringeren Bauteilschutz-Anfettung.

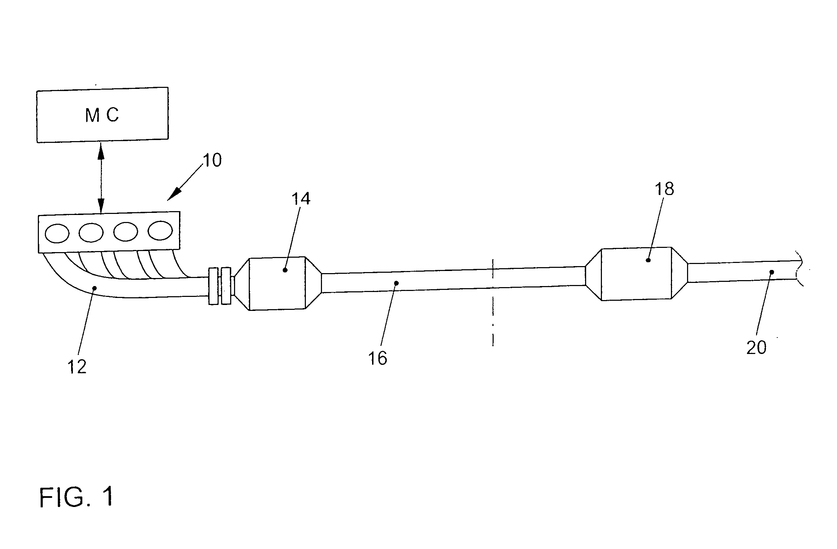

Weitere Ausgestaltungen, Aspekte und Vorteile der Erfindung sind auch unabhängig von ihrer Zusammenfassung in den Ansprüchen, der folgenden Beschreibung sowie der zugehörigen Zeichnung zu entnehmen. Die schematische Zeichnung zeigt in
Figur 1 eine Brennkraftmaschine mit einer zugeordneten Abgasreinigungsvorrichtung.

In Figur 1 ist eine bevorzugt in einem Kraftfahrzeug eingesetzte Brennkraftmaschine 10 mit mehreren Zylindern dargestellt. An die Brennkraftmaschine 10 ist eine an sich bekannte Abgasreinigungsvorrichtung mit einer Verbindungsleitung 12 (Abgaskrümmer), einem Vorkatalysator 14, einer Abgasleitung 16 und einem Hauptkatalysator 18 sowie einer weiteren Abgasleitung 20 angeordnet. Weitere Ausführungsformen der Erfindung können mehr als einen Hauptkatalysator umfassen. Vorzugsweise ist der Vorkatalysator 14 motornah und der Hauptkatalysator 18 in Unterbodenlage angeordnet.

Darüber hinaus umfasst die Erfindung jedoch auch Ausgestaltungen, bei denen der Vorkatalysator 14 ebenfalls in Unterbodenlage angeordnet ist. Die Verbindungsleitung 12 hat bevorzugt einen Wärmeverlust > 1 K/ cm Länge.

Der Vorkatalysator 14 umfasst einen vorzugsweise mit Washcoat beschichteten Träger und ist erfindungsgemäß edelmetallfrei ausgebildet. Der Washcoat ist eine poröse Metalloxidschicht, die auf dem Träger (Substrat) aufgebracht ist. Das häufigste Washcoat-Material ist Aluminiumoxid, wobei jedoch andere Materialien wie beispielsweise Siliziumoxid, Ceriumdioxid, Titandioxid, Zirkoniumoxid ebenfalls eingesetzt werden können.

Als Träger werden extruierte keramische Honeycombmonolithe mit wabenförmigen Zellen verwendet. Bevorzugt ist Cordierite, ein synthetisches keramisches Material mit einem geringen thermischen Ausdehnungskooeffizienten.

Ferner sind metallische Träger aus gewickelten und/oder gewellten Metallfolien, beispielsweise Eisen-Chrom-Aluminium-Legierungen und einer Dicke von 60-25µm vorgesehen.

Wie in Figur 1 angedeutet ist, ist der Katalysator 14 in einem Gehäuse mit einem Einlass- und einem Auslass für das Abgas untergebracht.

Der Hauptkatalysator 18 ist stromab des Vorkatalysators 14 angeordnet und mit dem Vorkatalysator 14 durch eine Abgasleitung 16 verbunden. Die Abgasleitung 16 ist vorzugsweise länger als 100 cm. Zur Verbesserung der Wärmekopplung zwischen Vorkatalysator 14 und Hauptkatalysator 18 weist die Abgasleitung 16 einen Wärmeverlust von höchstens 1 K/cm Länge auf. Besonders bevorzugt ist ein Luftspalt-Isoliertes Rohr (LSI-Rohr). Das LSI-Rohr besteht aus einem Gasführungskanal und einer Außenschale. Durch die Außenschale wird die Wärme- und Geräuschisolierung verbessert. Je nach eingesetztem Motorkonzept für die Brennkraftmaschine 10 ist der Hauptkatalysator 18 ein Dreiwegekatalysator oder ein Stickoxid (NOx)-Speicherkatalysator.

Erfindungsgemäß dient der edelmetallfreie Vorkatalysator 14 zur Aufheizung und Durchwärmung bis zum light-off des Hauptkatalysators 18. Insbesondere ist die Beschichtung des Trägers des Vorkatalysators 14 edelmetallfrei.

Der light-off des Vorkatalysators 14 basiert maßgeblich auf der Reaktion der Abgaskomponenten Kohlenwasserstoff (HC) und Kohlenmonoxid (CO) mit eingelagertem Sauerstoff (O₂).

Nach einem Kaltstart der Brennkraftmaschine 10 wird der Vorkatalysator 14 innerhalb einer kurzen Zeitspanne von weniger als beispielweise 30s eine light-off-Temperatur erreichen. Als light-off-Temperatur wird hier die Temperatur bezeichnet, bei der die Konvertierungsleistung einen vorgegebenen Wert von beispielsweise 50% oder 60% erreicht hat. Gegebenenfalls kann die light-off-Temperatur für verschiedene Abgaskomponenten wie beispielsweise HC oder CO unterschiedlich sein. Bei der Konvertierung vom HC und CO erfolgt eine Reaktion von mit insbesondere in dem Washcoat eingelagertem O₂. Da diese Reaktion exotherm ist, findet eine Aufheizung bzw. Durchwärmung des stromab des Vorkatalysators 14 angeordneten Hauptkatalysators 18 statt. Zu einem späteren Zeitpunkt nach dem Kaltstart hat auch der Hauptkatalysator 18 seine light-off-Temperatur erreicht.

In einer weiteren Ausführungsform der Erfindung weist der Vorkatalysator 14 einen Zeolith zur Speicherung von HC auf. Durch das verbesserte vorrübergehende adsorptive Einspeichern von HC wird eine Zeitspanne gewonnen, in der sich der stromab des Vorkatalysators 14 angeordnete Hauptkatalysator 18 aufheizen kann. Da Zeolith auch bei höheren Temperaturen stabil bleibt, ist das Adsorptionsverhalten auch noch nach einer thermischen Alterung gut. Unter Kaltstartbedingungen sind typische Adsorptionsdauern von bis zu 15 s erreichbar, bevor eine merkenswerte HC-Desorption erfolgt. Eine zusätzliche Aufheizung des Hauptkatalysators wird damit nicht bewirkt. Jedoch wird durch die adsorptive Einspeicherung von HC eine höhere Konvertierungsrate des Hauptkatalysators beispielsweise um ca. 20% erreicht.

Der Zeolith wird erfindungsgemäß auf eine Trägerstruktur des Vorkatalysators aufgebracht und/oder einer Washcout-Beschichtung beigemischt. Vorkatalysator 14 und Hauptkatalysator 18 sind vorzugsweise derart ausgelegt, dass abhängig von den Rohemissionen der Brennkraftmaschine 10 und den jeweils einzuhaltenden Abgasgrenzwerten eine mittlere Konvertierungsrate von 95 bis 99%, bevorzugt 98%, erreicht wird.

Im Vergleich zu den aus dem Stand der Technik bekannten mit Edelmetall beladenen Vorkatalysatoren, weist der erfindungsgemäße Vorkatalysator 14 eine geringere Konvertierungsleistung und eine geringere Exothermie auf.

Um dennoch eine vorgegebene hohe Gesamtkonvertierungsleistung zu erreichen, ist eine Anpassung von Vorkatalysator 14 und Hauptkatalysator 18 vorgesehen. Die Anpassung erfolgt vorzugsweise derart, dass für die Konvertierung der Abgaskomponenten HC, CO bzw. NOx ein bestimmter Anteil der Gesamtkonvertierung der jeweiligen Abgaskomponente von dem Vorkatalysator übernommen wird. Bevorzugt übernimmt der Vorkatalysator 14 einen Anteil von mehr als 50%, besonders bevorzugt mehr als 60% oder 70% der Gesamtkonvertierung. Für CO sind ein Anteil von 60%, vorzugsweise mehr als 70%, besonders bevorzugt mehr als 80% der Gesamtkonvertierung vorgesehen. Für NOx ist ein Anteil von mehr als 20%, vorzugsweise mehr als 30%, besonders bevorzugt mehr als 40% vorgesehen. Die Anpassung kann insbesondere durch eine relative Volumenvergrößerung des Hauptkatalysators 18 erreicht werden. Vorzugsweise erfolgt die Volumenvergrößerung des Hauptkatalysators 18 bei einer konstanten Beladungsdichte mit Edelmetallen, so dass die Gesamtbeladung des Hauptkatalysators 18 mit Edelmetall erhöht ist. Da gleichzeitig jedoch eine Einsparung durch den Wegfall der Edelmetallbeladung des Vorkatalysators 14 erfolgt, ist eine Verringerung der Edelmetallbeladung des Gesamtsystems möglich.

Bei einer alternativen Ausführungsform der Erfindung ist vorgesehen, dass Vorkatalysator 14 und Hauptkatalysator 18 derart angepasst sind, dass für die Konvertierung der Abgaskomponenten Kohlenwasserstoff, Kohlenmonoxid und Stickstoff zumindest eine der folgenden Bedingungen erfüllt ist:
Mehr als 50%, vorzugsweise mehr als 60%, besonders bevorzugt mehr als 70% des Kohlenwasserstoffs
Mehr als 60%, vorzugsweise mehr als 70%, besonders bevorzugt mehr als 80% des Kohlenmonoxids
Mehr als 20%, vorzugsweise mehr als 30%, besonders bevorzugt mehr als 40% der Stickoxide
der Konvertierungsleistung für die jeweilige Abgaskomponente eines üblichen Edelmetall aufweisenden Vorkatalysators wird von dem edelmetallfreien Vorkatalysator 14 übernommen.

Zur Steuerung der Brennkraftmaschine 10 ist wie in Figur 1 schematisch dargestellt, ein Motorkontrollsystem MC vorgesehen, das in Abhängigkeit von dem Signal oder den Signalen einer oder mehrerer nicht dargestellter Lambdasonden den Sauerstoffgehalt des Luft/Kraftstoffgemischs bzw. des Abgases festlegt. Wie an sich aus dem Stand der Technik bekannt ist, erhält das Kontrollsystem MC während des Betriebs weitere motorrelevante Werte, wie beispielsweise die Drehzahl des Motors, den Lastwert sowie vorzugsweise die Signale von Temperatursensoren, durch die die Temperatur des Abgases bzw. von Komponenten wie dem Vorkatalysator 14 oder dem Hauptkatalysator 18 bestimmt oder ermittelt werden können.

Insbesondere wird durch das Kontrollsystem MC eine Temperaturüberwachung des Katalysatorsystems vorgenommen. Zur Verhinderung von zu hoher thermischer Belastung des Vorkatalysators 14 wird die Brennkraftmaschine 10 mit einem angefetteten Motor-Lambda-Wert betrieben, wenn der Vorkatalysator eine kritische Temperatur T_{VK} zumindest länger als ein kritisches Zeitintervall annimmt. Da der erfindungsgemäße Vorkatalysator 14 eine höhere Temperaturstabilität als ein konventioneller mit Edelmetall versehener Vorkatalysator aufweist, kann die Temperatur T_{VK} höher gewählt werden. Bevorzugt ist ein Wert von T_{VK} ≥ 900°C; vorzugsweise ≥ 1000° C, besonders bevorzugt 1100°C optimal 1200°C. Eine entsprechende Auslegung des Vorkatalysators 14 erfolgt durch eine entsprechende Wahl der den Träger und/oder die Beschichtung charakterisierenden Parameter, wie beispielsweise Dicke der Zellwände der wabenförmigen Zellen, der Metallfolien oder der Dicke der Trägerbeschichtung. Ferner ist eine Anpassung der Abgasleitung 16 zumindest hinsichtlich ihrer Länge, Konstruktion oder thermischen Eigenschaften vorgesehen.

Die Brennkraftmaschine 10 muss derart betrieben werden, dass dauerhaft eine den gesetzlich vorgeschriebenen Abgasgrenzwerten entsprechende maximale Gesamtemission an Schadstoffen, insbesondere von HC, CO und NOx gewährleistet ist. Die Höhe der Grenzwerte wird üblicherweise während sogenannter Fahrzyklen vorgeschrieben. In den EU-Ländern wird beispielsweise gemäß der EU-Richtlinie 91/441/EWG von dem neuen europäischen Fahrzyklus NEFZ ein Geschwindigkeitsprofil vorgegeben, das einem typischen Stadt- und Überlandverkehr entsprechen soll. Ein Test entsprechend dem NEFZ hat eine Gesamtdauer von 1180s, wobei die zurückgelegte Fahrstrecke 11,007 km beträgt. Die gemessenen kumulierten Emissionen während des Fahrzyklus werden auf die Fahrstrecke bezogen.

Zur Sicherung des Bauteilschutzes ist ein gewisser zeitlicher Anteil des Betriebes der Brennkraftmaschine nur mit Anfettung des Motor-Lambda-Werts während des NEFZ oder eines anderen Fahrprofils, insbesondere bei einem Betrieb mit Vollast oder einer oberen Teillast möglich. Erfindungsgemäß wird der zeitliche Anteil eines Betriebs ohne Anfettung, insbesondere bei Vollast oder einer oberen Teillast für ein vorgegebenes Fahrprofil gegenüber dem einer Brennkraftmaschine mit einer Abgasreinigungsvorrichtung mit einem nicht edelmetallfreien Katalysator erhöht. Vorzugsweise ist eine Erhöhung des zeitlichen Anteils ohne Anfettung um mindestens 10% vorgesehen. Optional ist die Abgasreinigungsvorrichtung derart ausgelegt, dass keine Anfettung im NEFZ erfolgt.

Aufgrund der geringeren Konvertierungsleistung des edelmetallfreien Vorkatalysators 14 ist die Temperaturerhöhung durch die exotherme Reaktionen im Vorkatalysator relativ gering. Die Anfettung des Motor-Lambda-Werts kann daher entsprechend zurückgenommen werden. Vorzugsweise ist vorgesehen, die Anfettung entsprechend einer um 50K geringeren Temperaturerhöhung durch die exotherme Reaktion zurückzunehmen. Da ein edelmetallfreier Vorkatalysator an sich bereits temperaturbeständiger ist, und damit höheren Temperaturen ausgesetzt werden kann, ist ferner eine weitere Zurücknahme der Anfettung vorgesehen, die vorzugsweise einer Beaufschlagung des Vorkatalysators mit einer um 50K höheren Temperatur entspricht.

Da für Abgasreinigungssysteme in den meisten Ländern eine On Bord-Diagnose (OBD) gesetzlich vorgeschrieben ist, ist unter Umständen eine Anpassung einer derartigen Applikation an die durch einen edelmetallfreien Vorkatalysator bedingte Veränderung des Abgasreinigungssystems erforderlich. Soweit ein derartiges OBD-System auf der Überwachung der Sauerstoffspeicherfähigkeit des Vorkatalysators basiert, und soweit diese maßgeblich von der Sauerstoffspeicherfähigkeit des Trägers und/oder des Washcoats und nur in geringem Umfang von der Edelmetallbeladung abhängig ist, ist jedoch nur eine geringer Anpassungsbedarf für das OBD-System zu erwarten.

## Patentansprüche

1. Brennkraftmaschine mit einer Abgasreinigungsvorrichtung mit einem als Startkatalysator geeigneten Vorkatalysator und zumindest einem stromab des Vorkatalysators angeordneten Hauptkatalysator sowie einer zwischen Vorkatalysator und Hauptkatalysator angeordneten Abgasleitung, **dadurch gekennzeichnet, dass** der Vorkatalysator edelmetallfrei ausgebildet ist.

2. Brennkraftmaschine nach Anspruch 1, **dadurch gekennzeichnet, dass** der Vorkatalysator als Kohlenwasserstoff-Adsorber ausgebildet ist.

3. Brennkraftmaschine nach Anspruch 1 oder 2, **dadurch gekennzeichnet, dass** die Abgasleitung zumindest eines der folgenden Merkmale ausweist:
- eine Länge von zumindest 100 cm
- einen Wärmeverlust von höchstens 1 K/cm Länge der Abgasleitung
- als Luftspalt-isoliertes Rohr ausgebildet ist.

4. Brennkraftmaschine nach zumindest einem der vorhergehenden Ansprüche, **dadurch gekennzeichnet, dass** der Vorkatalysator eine Trägerstruktur mit einer Zeolith-Beschichtung aufweist.

5. Brennkraftmaschine nach zumindest einem der vorhergehenden Ansprüche, **dadurch gekennzeichnet, dass** der Vorkatalysator eine Trägerstruktur mit einem Washcoat aufweist.

6. Brennkraftmaschine nach zumindest einem der vorhergehenden Ansprüche, **dadurch gekennzeichnet, dass** der Vorkatalysator als Ganzmetallkatalysator vorzugsweise gewellten und/oder gewickelten Metallfolien aufweist.

7. Brennkraftmaschine nach zumindest einem der vorhergehenden Ansprüche, **dadurch gekennzeichnet, dass** die Brennkraftmaschine mit dem Vorkatalysator über eine Verbindungsleitung verbunden ist, die einen Wärmeverlust von mindestens 1 K/cm Länge der Verbindungsleitung aufweist.

8. Brennkraftmaschine nach zumindest einem der vorhergehenden Ansprüche, **dadurch gekennzeichnet, dass** der Vorkatalysator motornah und/oder der Hauptkatalysator in Unterbodenposition angeordnet ist.

9. Brennkraftmaschine nach zumindest einem der vorhergehenden Ansprüche, **dadurch gekennzeichnet, dass** eine Anpassung von Vorkatalysator und Hauptkatalysator vorgesehen ist, wobei für die Konvertierung der Abgaskomponenten Kohlenwasserstoff, Kohlenmonoxid und Stickoxid zumindest eine der folgenden Bedingungen erfüllt ist:
mehr als 50%, vorzugsweise mehr als 60%, bevorzugt mehr als 70% des Kohlewasserstoffs
mehr als 60%, vorzugsweise mehr als 70%, besonders bevorzugt mehr als 80% des Kohlenmonoxids
mehr als 20%, vorzugsweise mehr als 30%, besonders bevorzugt mehr als 40% der Stickoxide
der Gesamtkonvertierung der jeweiligen Abgaskomponente wird von dem Vorkatalysator übernommen.

10. Brennkraftmaschine nach Anspruch 9, **dadurch gekennzeichnet, dass** die Anpassung eine relative Volumenvergrößerung des Hauptkatalysators umfasst.

11. Brennkraftmaschine nach zumindest einem der vorhergehenden Ansprüche, **dadurch gekennzeichnet, dass** der Vorkatalysator derart ausgelegt ist, dass eine Anfettung eines Motor-Lambda-Wertes für einen Bauteilschutz erst bei einer höheren Temperatur T_{VK} des Vorkatalysators als bei einem nicht edelmetallfreien Vorkatalysator erforderlich ist.

12. Brennkraftmaschine nach zumindest einem der vorhergehenden Ansprüche, **dadurch gekennzeichnet, dass** zusätzlich zur Anpassung und/oder zur Auslegung des Vorkatalysators eine Anpassung der Abgasleitung zumindest hinsichtlich ihrer Länge, Konstruktion oder thermischen Eigenschaften vorgesehen ist.

13. Brennkraftmaschine nach zumindest einem der vorhergehenden Ansprüche, **dadurch gekennzeichnet, dass** eine Anfettung zum Bauteilschutz erst bei einer Temperatur T_{VK} ≥ 900°C, vorzugsweise ≥ 1000°C, besonders bevorzugt 1100°C optimal 1200°C vorgesehen ist.

14. Brennkraftmaschine nach zumindest einem der vorhergehenden Ansprüche, **dadurch gekennzeichnet, dass** der Hauptkatalysator ein Dreiwegekatalysator ist.

15. Brennkraftmaschine nach zumindest einem der vorhergehenden Ansprüche, **dadurch gekennzeichnet, dass** der Hauptkatalysator ein NOx-Speicherkatalysator ist.

16. Brennkraftmaschine nach zumindest einem der vorhergehenden Ansprüche, **dadurch gekennzeichnet, dass** ein zeitlicher Anteil eines Betriebes ohne Anfettung für einen Bauteilschutz, insbesondere bei Volllast oder einer oberen Teillast für ein vorgegebenes Fahrprofil gegenüber einer Brennkraftmaschine mit einer Abgasreinigungsvorrichtung mit einem nicht edelmetallfreien Katalysator erhöht werden kann, vorzugsweise um mindestens 10%.

17. Verfahren zum Betrieb einer Brennkraftmaschine mit einer Abgasreinigungsvorrichtung mit einem Vorkatalysator, der einen vorzugsweise mit Washcoat beschichteten Träger umfasst und mit einem stromab des Vorkatalysators angeordneten Hauptkatalysator sowie einer zwischen Vorkatalysator und Hauptkatalysator angeordneten Abgasleitung, **dadurch gekennzeichnet, dass** der Vorkatalysator edelmetallfrei ausgebildet ist und eine Anfettung eines Motor-Lambda-Wertes für ein Bauteilschutz erst bei einer höheren Temperatur des Vorkatalysators T_{VK} erfolgt, als bei einem nicht edelmetallfreien Vorkatalysator üblich oder erforderlich ist.

18. Verfahren zum Betrieb einer Brennkraftmaschine mit einer Abgasreinigungsvorrichtung mit einem Vorkatalysator, der einen vorzugsweise mit Washcoat beschichteten Träger umfasst und mit einem stromab des Vorkatalysators angeordneten Hauptkatalysator sowie einer zwischen Vorkatalysator und Hauptkatalysator angeordneten Abgasleitung, insbesondere nach Anspruch 17, **dadurch gekennzeichnet, dass** ein zeitlicher Anteil eines Betriebs ohne Anfettung für einen Bauteilschutz, insbesondere bei Volllast oder einer oberen Teillast für ein vorgegebenes Fahrprofil gegenüber einer Brennkraftmaschine mit einer Abgasreinigungsvorrichtung mit einem nicht edelmetallfreien Katalysator erhöht ist, vorzugsweise um mindestens 10%.
